(19) Europäisches Patentamt
European Patent Office
Office européen des brevets

(11) Veröffentlichungsnummer: **0 084 111**
**B1**

(12) # EUROPÄISCHE PATENTSCHRIFT

(45) Veröffentlichungstag der Patentschrift: **10.04.85**

(51) Int. Cl.⁴: **C 09 D 7/12,** C 09 D 3/74, C 09 J 3/14, C 08 L 27/06, C 08 G 69/34

(21) Anmeldenummer: **82111251.3**

(22) Anmeldetag: **04.12.82**

(54) **Verfahren zum Herstellen von Überzügen und Klebeverbindungen mit Polyvinylchlorid-Plastisolen mit verbesserter Haftung und Plastisole für das Verfahren.**

(30) Priorität: **16.01.82 DE 3201265**

(43) Veröffentlichungstag der Anmeldung: **27.07.83 Patentblatt 83/30**

(45) Bekanntmachung des Hinweises auf die Patenterteilung: **10.04.85 Patentblatt 85/15**

(84) Benannte Vertragsstaaten: **BE DE FR GB IT LU NL SE**

(56) Entgegenhaltungen:
**AT - B - 301 881**
**DE - B - 2 654 871**

(73) Patentinhaber: **SCHERING AKTIENGESELLSCHAFT**
**Berlin und Bergkamen, Waldstrasse 14 Postfach 15 40, D-4709 Bergkamen (DE)**

(72) Erfinder: **Burba, Christian, Dr. Dipl.-Chem., Gerh.-Hauptmann-Strasse 9, D-4715 Ascheberg-Herbern (DE)**
Erfinder: **Goeke, Ulrich, Hülsdunkel 13, D-4670 Lünen (DE)**
Erfinder: **Esper, Norbert, Jahnstrasse 106 a, D-4619 Bergkamen (DE)**

EP 0 084 111 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zum Verkleben von metallischen Werkstoffen bzw. zur Herstellung von Überzügen auf metallischen Werkstoffen mit PVC-Plastisolen mit verbesserter Haftung bei Einbrenntemperaturen ab 90 °C, welche als haftverbessernde Zusätze Kondensationsprodukte aus polymerisierten Fettsäuren, Karbonsäuren und einem Überschuss, bezogen auf Karboxylgruppen der Säurekomponenten, an Polyalkylenpolyaminen enthalten.

Die Verrottungsfestigkeit von Polyvinylchlorid bzw. dessen Copolymerisaten gegen aggressive Medien ist hinlänglich bekannt und wird auf breiter Basis zum Korrosionsschutz von metallischen Oberflächen, zum Verkleben an Dünnblechkonstruktionen und zum Dichten an Schweissnähten, insbesondere im Automobilsektor genutzt.

Solche Überzüge werden in erster Linie in Form weichmacherhaltiger Vinylchloridpolymerisate (Plastisole) durch Streichen, Walzen oder Spritzen auf die Oberfläche der zu schützenden Werkstoffe aufgebracht. In einer weitverbreiteten Form bestehen solche Überzugsmassen (Plastisole) aus einem verpastbaren Polyvinylchlorid, das sich im besonderen durch ein definiertes Quellvermögen im Weichmacher auszeichnet, aus einem Weichmacher oder Weichmachergemisch, Füllstoffen, Stabilisatoren sowie gegebenenfalls Farbpigmenten und Polyvinylchloridverarbeitungshilfsstoffen.

Die Formulierung von weichmacherhaltigen Polyvinylchlorid-Überzugsmassen, deren Herstellung sowie Anwendungstechnik ist weitgehend in Krekeler Wick, „Kunststoff-Handbuch" (1963), Bd. II, Teil 1, S. 396 ff., beschrieben.

Es ist bekannt, dass ein wesentliches Kriterium für die Güte solchermassen applizierter Plastisole deren Haftung am beschriebenen Werkstoff ist. Dies trifft vor allem für Überzüge auf Metallteilen zu. Lockere Adhäsion der Schutzschicht erhöht die Gefahr des Eindringens aggressiver Medien. Im Falle der Beschichtung kann so z. B. Wasser den Überzug leicht unterwandern und das Metall korrodieren. Dies wird um so eher möglich sein, je geringer die Haftung des Schutzfilms am Metall ist.

Es bestand somit der Bedarf an Plastisolen, die hochfeste Verbindungen zwischen den verschiedensten, insbesondere metallischen Werkstoffen herzustellen erlauben.

Zur Erhöhung der Haftung dieser Überzüge wurde in der DE-OS Nr. 2123171 bereits vorgeschlagen, dem Plastisol ein Gemisch aus einer mehrfunktionellen organischen Säure oder deren Anhydrid und einer mehrfunktionellen organischen Base einzuarbeiten. Diese Mischung soll bereits bei Härtungstemperaturen unter 140 °C unter Salzbildung miteinander reagieren und dem Plastisol eine gute Haftung verleihen.

Wie aber in der DE-AS Nr. 2402037, Sp. 2, Z. 25 bis 27, und Beispiel 4d dargelegt, führte die Nacharbeitung der in der deutschen Offenlegungsschnift gegebenen Anweisung nicht zu zufriedenstellenden Ergebnissen.

Gemäss der DE-AS Nr. 2654871 werden Polyaminoamide, hergestellt aus einem polymerisierten Fettsäuregemisch mit erhöhtem Anteil an tri- und höherpolymerisierten Fettsäuren und einem Überschuss an Polyalkylenpolyaminen, welche einen bestimmten Imidazolingehalt aufweisen, in Anteilen von 0,5 bis 5 Gew.-%, bezogen auf die Plastisolmasse, als Haftvermittler eingesetzt.

Mit diesen Polyaminoamiden ist eine deutliche Verbesserung der Haftfestigkeit zu erzielen. In geringen Konzentrationen und bei niedrigen Einbrenntemperaturen waren jedoch weitere Verbesserungen hinsichtlich Haftung, Thermostabilität und Reissdehnung des gehärteten PVC-Plastisols wünschenswert.

Der Erfindung liegt daher die Aufgabe zugrunde, Haftvermittler für PVC-Plastisole zu finden, welche auch in geringer Konzentration und bei niedriger Einbrenntemperatur hohe Haftungen der Schutzüberzüge bzw. hohe Bindefestigkeiten der Klebeverbindungen bei verbesserter Thermostabilität und Reissdehnung aufweisen.

Diese Aufgabe wird erfindungsgemäss gelöst durch ein Verfahren zur Herstellung von Überzügen und Klebeverbindungen für Werkstoffe, bei dem Plastisole auf Basis von feinteiligem Polyvinylchlorid bzw. Vinylchloridcopolymerisaten, welche übliche Füllstoffe, Additive und Weichmacher und Haftvermittler auf Basis von Polyaminoamiden enthalten, aufgebracht werden, das dadurch gekennzeichnet ist, dass den Plastisolen als Haftvermittler Kondensationsprodukte, hergestellt aus

A) Polyaminoamiden aus

1. polymerisierten Fettsäuren, und

2. einem Überschuss, bezogen auf Carboxylgruppen, an Polyalkylenpolyaminen und mindestens einer

B) Karbonsäure bzw. einem Karbonsäureester der allgemeinen Formel I

$$R^1-(COOR^2)_n \qquad (I)$$

in welcher $R^1$ ein gegebenenfalls substituierter gesättigter oder ungesättigter aliphatischer, araliphatischer oder aromatischer Kohlenwasserstoffrest mit 2 bis 18 Kohlenstoffatomen und $R^2$ Wasserstoff oder ein Alkylrest mit 1 bis 8 Kohlenstoffatomen und n=1 oder 2 sein kann,
in Anteilen von 0,5 bis 5 Gew.-%, bezogen auf die Plastisolmasse, zugegeben und die derartig zubereiteten Plastisole bei Temperaturen ab 90 °C auf dem Werkstoff eingebrannt werden.

Ein weiterer Gegenstand der vorliegenden Erfindung ist dadurch gekennzeichnet, dass die Polyaminoamide gemäss A hergestellt werden aus

1. einem polymerisierten Fettsäuregemisch mit einem erhöhten Anteil an tri- und höherpolymeren Fettsäuren X, und

2. einem Überschuss an Polyalkylenpolyaminen, welche einen Imidazolingehalt Y aufweisen, in Anteilen von 0,5 bis 5 Gew.-%, bezogen auf die Plastisolmasse, zugegeben und die derartig zubereiteten Plastisole bei Temperaturen ab 90 °C auf dem Werkstoff eingebrannt werden, wobei, wenn einer der Werte von X oder Y die 40%-Grenze unterschreitet, der Wert der anderen Komponente mindestens 40+Z (wobei Z die Differenz des kleineren Wertes zu 40 ist), vorzugsweise jedoch 40+2Z betragen sollte.

Zur Herstellung der erfindungsgemäss als Haftvermittler eingesetzten Polyaminoamide können polymerisierte Fettsäuren mit variierenden Gehalten an monomeren, dimeren, trimeren und höherpolymeren Aminen verwendet werden.

Der Ausdruck polymerisierte Fettsäure bezieht sich in allgemeiner Form auf polymerisierte Säuren, die aus Fettsäuren erhalten werden. Der Ausdruck Fettsäure umfasst ungesättigte natürliche und synthetische einbasische aliphatische Säuren mit 8 bis 22, bevorzugt 18 Kohlenstoffatomen. Die Fettsäuren lassen sich nach bekannten Verfahren polymerisieren.

Erfindungsgemäss verwendbare polymere Fettsäuren sind die handelsüblichen Produkte, welche etwa folgende Zusammensetzung haben

| | |
|---|---|
| monomere Säuren (Mo) | 5 bis 15 Gew.-% |
| dimere Säuren (Di) | 55 bis 80 Gew.-% |
| trimere und höherpolymerisierte Säuren (Tri) | 10 bis 35 Gew.-% |

Erfindungsgemäss bevorzugt werden jedoch polymerisierte Fettsäuren mit erhöhten trimerisierten und höherpolymerisierten Gehalten (X). Diese Säuren sind herstellbar durch gezielte Reaktion nach einem radikalischen Mechanismus entsprechend der DE-OS Nr. 2506211 oder durch allgemein bekannte Destillationsverfahren aus den typischen, im Handel erhältlichen Produkten und haben etwa die folgende Zusammensetzung

| | |
|---|---|
| monomere Säuren (Mo) | 0 bis 5 Gew.-% |
| dimeren Säuren (Di) | 10 bis 25 Gew.-% |
| trimere und höherpolymerisierte Säuren (Tri; X) | 90 bis 75 Gew.-% |

Als erfindungsgemäss mitzuverwendende Polyalkylenpolyamine kommen insbesondere die zur Imidazolinbildung befähigten Amine der allgemeinen Formel II

$$H_2N\text{-}(CH_2-CH_2-NH)_{\overline{m}}CH_2-CH_2-NH_2 \quad (II)$$

mit m=1 bis 5, wie z.B. Diäthylentriamin, Triäthylentetramin, Tetraäthylenpentamin, die gegebenenfalls auch Anteile an anderen Aminen enthalten können (vgl. „Ullmann's Enzyklopädie der technischen Chemie", Bd. 14, 1963, S. 74), in Betracht, wie auch die nicht zur Imidazolinbildung befähigten Polyalkylenpolyamine der allgemeinen Formel

$$H_2N-CH_2-CH_2-CH_2-NH_{\overline{m}}CH_2-CH_2-CH_2-NH_2$$

mit m=1 bis 4, wie z.B. Dipropylentriamin, Tripropylentetramin.

Auch Polyalkylenpolyamine mit Äthylen- und Propylen-Brücken als Alkylenreste, die durch Cyanäthylierung der Amine und anschliessende Hydrierung erhalten werden, können eingesetzt werden (z.B. $N_3$-Amin, $N_4$-Amin; vgl. Firmenprospekt der BASF AG, 1976).

Erfindungsgemäss können auch andere Amine verwendet bzw. mitverwendet werden wie Amine der allgemeinen Formel III

$$H_2N-R-NH_2 \quad (III)$$

in welcher R ein aliphatischer, gegebenenfalls substituierter oder durch Heteroatome, insbesondere Sauerstoff, unterbrochener Kohlenwasserstoffrest mit 2 bis 36, insbesondere 6 bis 20 und 36 Kohlenstoffatomen ist, wie 1,2-Diaminoäthan, 1,6-Diaminohexan, 1,9-Diaminononan, 1,12-Diaminododekan, Dimerfettsäurediamin (hergestellt nach bekannten Verfahren aus dimeren Fettsäuren), die 2,2,4(4,4,2)-Trimethylhexamethylendiamine, 1,7-Diamino-4-oxaheptan, 1,12-Diamino-4,9-dioxadodekan, 1,20-Diamino-4,17-dioxaeicosan oder cyclische bzw. alicyclische Amine, welche gegebenenfalls Heteroatome, insbesondere Stickstoff, enthalten wie z.B. 1,4-Diaminocyclohexan, Isophorondiamin, Piperazin, Dimethylpiperazin, N-Aminoäthylpiperazin.

Der Überschuss an Aminen wird so gewählt, dass die Polyaminoamide Aminzahlen zwischen 200 und 450, vorzugsweise zwischen 300 und 400 aufweisen.

Die erfindungsgemäss mitverwendbaren Karbonsäuren oder Karbonsäureester fallen unter die allgemeine Formel I

$$R^1-(COOR^2)_n \quad (I)$$

in welcher $R^1$ ein gegebenenfalls substituierter gesättigter oder ungesättigter aliphatischer, araliphatischer oder aromatischer Kohlenwasserstoffrest mit 2 bis 18 Kohlenstoffatomen, $R^2$ Wasserstoff oder ein Alkylrest mit 1 bis 8 Kohlenstoffatomen und n=1 oder 2 sein kann.

Als Beispiele seien genannt: Bernstein-, Glutar-, Adipin-, Pimelin-, Kork-, Azelain-, Sebazin-, Dekandikarbon-, Phthal-, Isophthal-, Terephthal-, Benzoe-, Essig-, Propion-, Butter-, Valerion-, Capron-, Capryl-, Caprin-, Laurin-, Palmitin-, Stearin-, Aryl-, Croton-, Vinylessig-, Öl-, Linol-, Linolen-, Malein-, Fumar-, Zimt-, Phthal-, Isophthal-, Benzoe- und insbesondere Terephthalsäure werden erfindungsgemäss bevorzugt.

Der Anteil der Karbonsäuren beträgt 3 bis 20, insbesondere 7 bis 15 Gew.-%, bezogen auf Fettsäuregemisch.

Die Umsetzung erfolgt in an sich bekannter Weise, in der in erster Stufe ein Polyaminoamid aus den Komponenten A 1 und 2 zwischen ca. 210 bis 260 °C, gegebenenfalls im Vakuum, gebildet und dieses dann in zweiter Stufe mit der Komponente B unter an sich gleichen Bedingungen umgesetzt wird.

Die Reaktionsbedingungen können dabei in bekannter Weise so variiert werden, dass die Endprodukte den jeweils gewünschten Imidazolingehalt Y aufweisen.

Die erfindungsgemäss bevorzugten Haftvermittler werden unter Mitverwendung eines polymerisierten Fettsäuregemisches mit einem erhöhten Anteil an tri- und höherpolymerisierten Fettsäuren X hergestellt und weisen einen Imidazolingehalt von Y auf, wobei, wenn einer der Werte von

X oder Y die 40%-Grenze unterschreitet, der Wert der anderen Komponente mindestens 40+Z (wobei Z die Differenz des kleineren Wertes zu 40 ist), vorzugsweise jedoch 40+2Z, betragen sollte.

Die Gehalte an tri- und höherpolymerisierten Fettsäuren X sowie der Imidazolingehalt Y sind aufgrund der komplexen Zusammensetzung der Komponenten vor allem für den unteren Bereich variierbar. Die erfindungsgemäss erzielbaren Effekte hängen zwar in erster Linie von Art und Menge der mitverwendeten Karbonsäuren gemäss B ab, werden aber auch beeinflusst durch den Gehalt an tri- und höherpolymerisierten Säuren sowie deren Verhältnis zueinander, durch den Imidazolingehalt des Polyaminoamid/Polyaminoimidazolin-Gemisches sowie durch Art und Menge des verwendeten Amins oder Amingemisches.

Bevorzugt werden Polyaminoamide aus Fettsäuren mit ⩾40% tri- und höherpolymerisierten Anteilen und einem Imidazolingehalt des Kondensationsprodukts von ebenfalls ⩾40%.

Die obere Grenze der Gehalte an tri- und höherpolymerisierten Fettsäuren ist 100%; die obere Grenze des Imidazolingehaltes bei den Polyaminoimidazolinen ist der jeweils praktisch erzielbare Höchstwert des für das jeweilige Gemisch errechenbaren theoretisch möglichen Gehaltes.

Unterschreitet einer der Werte von X oder Y die 40%-Grenze, so sollte der Wert der anderen Komponente jedoch zur Erzielung eines deutlichen Effektes mindestens 40+Z (wobei Z die Differenz des kleineren Wertes zu 40 ist), vorzugsweise jedoch 40+40+2Z, betragen.

Der Bereich, in dem beide Werte niedrig liegen, ist zwar weniger bevorzugt, jedoch innerhalb enger Grenzen noch möglich. So sollte, liegt einer der Werte unter 40% und der andere unter 50%, die Differenz des kleineren Wertes zu 40 nicht grösser als 10 sein.

Die mit der Erfindung erzielten Vorteile liegen darin, dass die Plastisolmischungen praktisch unbegrenzt lagerstabil sind, keine oder nur minimale Farbänderungen nach dem Einbrennen aufweisen, eine deutliche Steigerung der Haftfestigkeiten erzielbar ist, dass der auf das Substrat aufgetragene und in ungehärtetem Zustand in feuchter Atmosphäre gelagerte Film nach dem Einbrennen porenfreie (keine Bläschenbildung) Überzüge liefert, und insbesondere darin, dass diese Steigerung mit geeigneten Formulierungen auch mit geringen Haftvermittlerkonzentrationen bei Einbrenntemperaturen ab 90, vorzugsweise ab 110 °C, erzielbar ist.

In der Regel kann die für die entsprechende PVC-Formulierung günstigste Einbrenntemperatur – welche von der Gelierungstemperatur der verwendeten PVC-Formulierung mitbestimmt wird – durch einige einfache Orientierungsversuche ermittelt werden.

Als zu beschichtende bzw. zu verklebende Substrate kommen alle auf diesem Gebiet üblichen Werkstoffe, insbesondere Metalle und Glas, in Betracht.

Gegebenenfalls können die erfindungsgemäss verwendeten, oben beschriebenen Polyaminoamide/Polyaminoimidazolin-Gemische mit gebräuchlichen Ketonen wie Aceton, Methyläthylketon, Diäthylketon, Methylisobutylketon, Cyclohexanon, Cyclopentanon, Diisobutylketon, 3,3,5-Trimethylcyclohexanon, Methylphenylketon oder mit Aldehyden wie Acetataldehyd, Butyraldehyd, Isobutyraldehyd, Benzaldehyd zu den entsprechenden Schiffschen Basen und gegebenenfalls Enaminen umgesetzt werden.

Die Umsetzung erfolgt nach bekannten Verfahren, sie kann durch Säuren katalysiert mit oder ohne Lösungsmittel durchgeführt werden. Es ist auch möglich, die Carbonylverbindungen selbst – anstelle des Lösungsmittels – als Schleppmittel für das abzuscheidende Reaktionswasser zu verwenden.

Gegebenenfalls können die freien Aminogruppen der obengenannten Polyaminoamide/Polyaminoimidazoline auch mit im Unterschuss einzusetzenden Epoxidverbindungen adduktiert werden.

Als geeignete Epoxidverbindungen seien z.B. Epoxide, die sich von mehrwertigen Phenolen, insbesondere Bisphenolen, wie z.B. Diphenylolpropan (Bisphenol A), Diphenylolmethan (Bisphenol F) und Phenol-Formaldehyd-Kondensationsprodukten (Novolaken) sowie von aromatischen Di- und Polycarbonsäuren wie z.B. den Phthalsäuren ableiten, genannt.

Die Addukte erhält man, indem man 1 Eq aktiven Wasserstoff der Aminverbindung mit 0,5 bis 0,005, insbesondere 0,2 bis 0,03 Eq Epoxidsauerstoff des Polyepoxids umsetzt.

Des weiteren können die Polyaminoamide/Polyaminoimidazolin-Gemische, deren aminogruppenhaltige Epoxidaddukte sowie die aus diesen beiden Produktgruppen herstellbaren Schiffschen Basen bzw. gegebenenfalls Enamine auch miteinander vermischt und als Haftvermittler verwendet werden.

Die in den Beispielen verwendeten Fettsäuren haben die folgende Zusammensetzung

1) Zusammensetzung laut GLC:

| | |
|---|---|
| Monomere Fettsäure | 9% |
| Dimere Fettsäure | 75% |
| Trimere Fettsäure und höherpolymere Fettsäuren | 16% |

2) Zusammensetzung laut GLC:

| | |
|---|---|
| Monomere Fettsäure | 1% |
| Dimere Fettsäure | 25% |
| Trimere Fettsäure und höherpolymere Fettsäuren | 74% |

3) Zusammensetzung laut GLC:

| | |
|---|---|
| Monomere Fettsäure | 1% |
| Dimere Fettsäure | 96% |
| Trimere Fettsäure und höherpolymere Fettsäuren | 3% |

*Herstellung der Haftvermittler für die erfindungsgemässen Plastisole:*

*Beispiele für die Kondensation*

1. In den nachfolgenden Beispielen wurden zu dem handelsüblichen Haftvermittler ® Euretek

(eingetragenes Warenzeichen der Schering AG) 505 (auf Basis von polymerisierter Fettsäure und einem Polyalkylenpolyamin Az 376, IA 60%) die in der Tabelle aufgeführten Karbonsäuren gegeben und die Mischung einer Nachkondensation unterworfen, indem sie unter Stickstoff auf 210 °C aufgeheizt und 1 h bei dieser Temperatur gehalten wurde. Danach wurde innerhalb 1 h ein Vakuum von ca. 100 Torr angelegt und eine weitere Stunde bei 210 °C und 100 Torr nachkondensiert. Die Kondensationsbedingungen können dabei je nach gewünschtem IA-Gehalt in bekannter Weise variiert werden.

Die erhaltenen Reaktionsprodukte wurden als 60%ige Mischung mit den angegebenen Weichmachern dem Plastisol zugesetzt.

2. Anstelle des ®Euretek 505 wurde das handelsübliche Polyaminoamid ®Versamid (eingetragenes Warenzeichen der Henkel Corp.) 140 (Az 367, IA 60%) wie o.a. kondensiert und eingesetzt.

3. Anstelle des ®Euretek 505 wurde ein Polyaminoamid gemäss der DE-AS Nr. 2654871 aus 800 g polymerer Fettsäure 1 und 200 g polymerer Fettsäure 2 und 534 g Teta (Triäthylentetramin) hergestellt (Az 387, IA 78%) und wie o.a. kondensiert und eingesetzt.

4. Wie Beispiel 3 mit dem Unterschied, dass als polymerisierte Fettsäure die Fettsäure 3 eingesetzt wurde.

*Herstellung der Plastisole*

Zu einem Plastisol, bestehend aus

45 Gew.-Teilen eines verpastbaren Polyvinylchlorids mit K-Wert 70

55 Gew.-Teilen Phthalsäuredi-2-äthylhexylester

100 Gew.-Teilen eines Füllstoffgemisches aus 50% Kreide und 50% Bariumsulfat

1,5 Gew.-Teile Diisobutylzinnisooctylthioglycolsäureester

wird 1 Gew.-% der genannten Haftvermittler oder beliebige Abmischungen dieser Produkte untereinander, bezogen auf die Gesamtmischung, zugesetzt.

Die Haftvermittler können aber auch anderen üblichen Plastisolformulierungen als oben angegeben zugesetzt werden, um die erfindungsgemässen selbsthaftenden Plastisole zu erhalten.

Die mit den erfindungsgemässen Plastisolen erzielbaren Bindfestigkeiten von Verklebungen wurden in Anlehnung an DIN 53 283 durch Messung der Zugscherfestigkeit bestimmt.

Dazu wurden Sonderbleche, Typ 901 der Fa. Metallgesellschaft, Frankfurt, als Fügeteile verwendet. Masse der Fügeteile: 2,5×10,5×0,15 cm (Breite × Länge × Dicke).

Die Schichtdicke des Plastisols in der Klebfuge wurde mittels Distanzstücke auf 2 mm eingestellt.

Die Fügeteile wurden bei 160 °C 30 min lang erhitzt und dabei 15 mm überlappend verklebt. Es wurden die folgenden Zugscherfestigkeiten erhalten.

*Erfindungsgemässe Beispiele*

| Beispiel | Zusammensetzung | Herstellung nach Beispiel | Kennzahlen | | Bindefestigkeit ($kp/cm^2$) | 60%ig in |
|---|---|---|---|---|---|---|
| | | | Az | IA % | | |
| 1 | ®Euretek 505 + 5% Phthalsäure | 1 | 337 | 53 | 22,8 | DOP[1] |
| 2 | ®Euretek 505 + 5% Phthalsäure | 1 | 338 | 65 | 22,0 | |
| 3 | ®Euretek 505 + 5% Dimethylterephthalat | 1 | 385 | 60 | 24,4 | DOP/BZA[2] 9:1 |
| 4 | ®Euretek 505 + 10% Dimethylterephthalat | 1 | 286 | | 26,5 | DOP/BZA 1:1 |
| 5 | ®Euretek 505 + 5% Isophthalsäure | 1 | 345 | 67 | 23,9 | DOP/BZA 8:2 |
| 6 | ®Euretek 505 + 10% Isophthalsäure | 1 | 296 | 61 | 24,4 | BZA |
| 7 | ®Euretek 505 + 5% Benzoesäure | 1 | 348 | | 21,4 | DOP/BZA 9:1 |
| 8 | ®Euretek 505 + 5% Azelainsäure | 1 | 343 | | 23,2 | DOP/BZA 9:1 |
| 9 | ®Versamid 140 + 5% Dimethylterephthalat | 2 | 343 | 67 | 17,8 | DOP/BZA 9:1 |
| 10 | ®Versamid 140 + 5% Isophthalsäure | 2 | 346 | 60 | 16,6 | DOP |
| 11 | ®Versamid 140 + 5% Azelainsäure | 2 | 345 | 72 | 17,9 | DOP/BZA 9:1 |
| 12 | Polyaminoamid gemäss DE-AS Nr. 2654871 + 5% dimethylterephthalat | 3 | 343 | | 21,9 | DOP/BZA 9:1 |
| 13 | Handelsübliches Polyaminoamid + 5% Dimethylterephthalat | 4 | 338 | | 17,8 | DOP/BZA 9:1 |
| 14 | Beispiel 11 + 3% Ep | | 334 | 72 | 19,8 | DOP/BZA 9:1 |
| 15 | Beispiel 10 + MEK | | 250 | 60 | 20,2 | DOP/BZA 9:1 |

[1] DOP = Dioctylphthalat
[2] BZA = Benzylalkohol
MEK = Methyläthylketon
Ep = Glycidyläther auf Basis von Bisphenol A mit einem Epoxidwert von 0,53

*Beispiel 14*

Zu 100 g des Polyaminoamids gemäss Beispiel 11 werden 3% eines Dianglycidyläthers mit dem Epoxidwert von 0,53 gegeben und bei 80 °C unter sechsstündigem Rühren zum Addukt umgesetzt. Das Produkt weist eine Aminzahl von 334 und einen Imidazolingehalt von 72% auf. Eine 60%ige Lösung in DOP/BZA 9:1 weist eine Bindefestigkeit von 19,8 kp/cm² auf.

*Beispiel 15*

100 g des Polyaminoamids des Beispiels 10 werden mit einem Überschuss an Methyläthylketon (MEK) am Wasserabscheider unter Rückfluss erhitzt, bis die Wasserabscheidung beendet ist. Das überschüssige MEK wird im Vakuum abdestilliert und man erhält ein Ketimingruppen enthaltendes Produkt mit der Aminzahl 250 und einem Imidazolingehalt von 60%. Eine 60%ige Lösung in DOP/BZA 9:1 weist eine Bindefestigkeit von 20,2 kp/cm² auf.

*Vergleichsbeispiele ohne Co-Karbonsäuren*

| Beispiel | Zusammensetzung | Herstellung nach Beispiel | Kennzahlen | | Bindefestigkeit (kp/cm²) | 60%ig in |
|---|---|---|---|---|---|---|
| | | | Az | IA % | | |
| 1 | ®Euretek 505 | – | 376 | 60 | 16,2 | DOP[1] |
| 2 | ®Versamid 140 | – | 367 | 60 | 15,5 | DOP/BZA[2] 9:1 |
| 3 | Polyaminoamid gemäss DE-AS Nr. 2654871 | 3 | 387 | 78 | 17,4 | DOP/BZA 9:1 |
| 4 | Handelsübliches Polyaminoamid | 4 | 398 | 70 | 7,2 | DOP/BZA 9:1 |

[1] DOP = Dioctylphthalat
[2] BZA = Benzylalkohol

**Patentansprüche**

1. Verfahren zur Herstellung von Überzügen und Klebeverbindungen für Werkstoffe, bei dem Plastisole auf Basis von feinteiligem Polyvinylchlorid bzw. Vinylchloridcopolymerisaten, welche übliche Füllstoffe, additive Weichmacher und Haftvermittler auf Basis von Polyaminoamiden enthalten, aufgebracht werden, dadurch gekennzeichnet, dass den Plastisolen als Haftvermittler Kondensationsprodukte, hergestellt aus

A) Polyaminoamiden aus
1. polymerisierten Fettsäuren, und
2. einem Überschuss, bezogen auf Carboxylgruppen, an Polyalkylenpolyaminen und mindestens einer

B) Karbonsäure bzw. einem Karbonsäureester der allgemeinen Formel (I)

$$R^1-(COOR^2)_n \qquad (I)$$

in welcher $R^1$ ein gegebenenfalls substituierter gesättigter oder ungesättigter aliphatischer, araliphatischer oder aromatischer Kohlenwasserstoffrest mit 2 bis 18 Kohlenstoffatomen und $R^2$ Wasserstoff oder ein Alkylrest mit 1 bis 8 Kohlenstoffatomen und n=1 oder 2 sein kann,
in Anteilen von 0,5 bis 5 Gew.-%, bezogen auf die Plastisolmasse, zugegeben und die derartig zubereiteten Plastisole bei Temperaturen ab 90 °C auf dem Werkstoff eingebrannt werden.

2. Verfahren zur Herstellung von Überzügen und Klebeverbindungen gemäss Anspruch 1, dadurch gekennzeichnet, dass die Polyaminoamide gemäss (A) hergestellt werden aus
1. einem polymerisierten Fettsäuregemisch mit einem erhöhten Anteil an tri- und höherpolymeren Fettsäuren (X), und
2. einem Überschuss an Polyalkylenpolyaminen, welche einen Imidazolingehalt (Y) aufweisen, in Anteilen von 0,5 bis 5 Gew.-%, bezogen auf die Plastisolmasse, zugegeben und die derartig zubereiteten Plastisole bei Temperaturen ab 90 °C auf dem Werkstoff eingebrannt werden, wobei, wenn einer der Werte von (X) oder (Y) die 40%-Grenze unterschreitet, der Wert der anderen Komponente mindestens 40+Z (wobei (Z) die Differenz des kleineren Wertes zu 40 ist), vorzugsweise jedoch 40+2Z betragen sollte.

3. Verfahren zur Herstellung von Überzügen und Klebeverbindungen gemäss den Ansprüchen 1 und 2, dadurch gekennzeichnet, dass die Karbonsäure gemäss (B) in Mengen von 3 bis 20 Gew.-%, bezogen auf Fettsäuregemisch, eingesetzt wird.

4. Verfahren zur Herstellung von Überzügen und Klebeverbindungen gemäss den Ansprüchen 1 bis 3, dadurch gekennzeichnet, dass als Karbonsäuren gemäss (B) aromatische Karbonsäuren verwendet werden.

5. Abänderung des Verfahrens zur Herstellung von Überzügen und Klebeverbindungen gemäss den Ansprüchen 1 bis 4, dadurch gekennzeichnet, dass als Haftvermittler Umsetzungsprodukte der aus (A) und (B) hergestellten Kondensationsprodukte mit Ketonen oder Aldehyden verwendet werden.

6. Abänderung des Verfahrens zur Herstellung von Überzügen und Klebeverbindungen gemäss den Ansprüchen 1 bis 4, dadurch gekennzeichnet, dass als Haftvermittler Addukte der aus (A) und (B) hergestellten Kondensationsprodukte mit Epoxidgruppen enthaltenden Verbindungen verwendet werden.

7. Plastisole für die Herstellung von Überzügen auf Werkstoffen, enthaltend feinteiliges Polyvinylchlorid bzw. Vinylchloridcopolymerisate, übliche Weichmacher, Füllstoffe, Additive, dadurch gekennzeichnet, dass als Haftvermittler die gemäss einem oder mehrerer der Ansprüche 1 bis 6 gekennzeichneten Kondensationsprodukte verwendet werden.

## Claims

1. A method for the production of coatings and adhesive compounds for materials, comprising a plastisol based on finely divided polyvinylchloride or vinylchloride copolymers containing the usual fillers, additive plasticisers, and polyaminoamide-based adhesives, characterised in that adhesive condensation products made from

(*A*) polyaminoamides made from

1. polymerised fatty acids, and

2. an excess, with respect to carboxyl groups, of polyalkenepolyamines, and at least one

(*B*) carboxylic acid or a carboxylic acid ester of the general Formula (I)

$$R^1-(COOR^2)_n \qquad (I)$$

in which $R^1$ can be a substituted saturated or unsaturated aliphatic, arylaliphatic or aromatic hydrocarbon group of 2 to 18 carbon atoms and $R^2$ can be hydrogen or an alkyl group of 1 to 8 carbon atoms and n can be 1 or 2,

are added to the plastisols in 0.5 to 5 weight-% of the plastisol mass, and the plastisols so prepared are bonded to the material at temperatures of 90 °C upwards.

2. A method for the production of coatings and adhesive compounds, according to Claim 1, characterised in that the polyaminoamide according to (*A*) is made from

1. a polymerised fatty acid mixture with an increased proportion of tri- and higher polymer fatty acids (X), and

2. an excess of polyalkylenepolyamines

which have a content (Y) of imidazoline, added in 0.5 to 5 weight-% in relation to the plastisol mass, and the plastisols thus prepared are bonded to the material at temperatures of 90 °C upwards, wherein, whenever one of the values of (X) or (Y) falls below the 40% limit, the value of the other component should amount to at least 40+Z, preferably however 40+2Z (where (Z) is the difference between 40 and the lower value).

3. Method for the production of coatings and adhesive compounds, according to Claims 1 and 2, characterised in that the carboxylic acid, according to (*B*), is added in quantities of 3 to 20 weight-%, with respect to the fatty acid mixture.

4. Method for the production of coatings and adhesive compounds, according to Claims 1 to 3, characterised in that aromatic carboxylic acids are used as carboxylic acids according to (*B*).

5. Modification of the method of production of coatings and adhesive compounds, according to Claims 1 to 4, characterised in that reaction products of the condensation products prepared from (*A*) and (*B*) are used with ketones or aldehydes as adhesion improvers.

6. Modification of the method of production of coatings and adhesive compounds, according to Claims 1 to 4, characterised in that adducts of the condensation products prepared from (*A*) and (*B*) are used with compounds containing epoxy groups as adhesion improvers.

7. Plastisols, for the manufacture of coatings for materials, containing finely divided polyvinylchloride e.g. vinylchloride copolymers, the usual plasticisers, fillers and additives, characterised in that condensation products defined according to one or more of Claims 1 to 6 are used as adhesion improvers.

## Revendications

1. Procédé de préparation de revêtements et de joints collés de matériaux, selon lequel on applique des plastisols à base de poly(chlorure de vinyle) ou de copolymères de chlorure de vinyle en fines particules, contenant des charges usuelles, des additifs plastifiants et des agents d'amélioration de l'adhérence à base de polyaminoamide, procédé caractérisé en ce qu'on ajoute aux plastisols, à titre d'agents d'amélioration de l'adhérence, en des proportions de 0,5 à 5% en poids, par rapport à la composition de plastisols, des produits de condensation préparés à partir

A) de polyaminoamides dérivant

1. d'acides gras polymérisés; et

2. d'un excès, par rapport aux groupes carboxyles, de polyalkylènepolyamines, et au moins

B) d'un acide carboxylique ou d'un ester d'acide carboxylique de formule générale (I):

$$R^1-(COOR^2)_n \qquad (I)$$

dans laquelle $R^1$ peut représenter un radical d'hydrocarbure aliphatique, araliphatique ou aromatique, saturé ou insaturé, éventuellement substitué, comportant 2 à 18 atomes de carbone, et $R^2$ peut représenter un atome d'hydrogène ou un radical alkyle ayant 1 à 8 atomes de carbone, et n peut valoir 1 ou 2,

et l'on cuit les plastisols ainsi préparés, à des températures partant de 90 °C, sur le matériau.

2. Procédé de préparation de revêtements et de joints collés selon la revendication 1, caractérisé en ce qu'on ajoute les polyaminoamides selon (A), préparés à partir

1. d'un mélange d'acides gras polymérisés ayant une proportion accrue d'acides gras trimérisés et à indice plus élevé de polymérisation (X), et

2. d'un excès de polyalkylènepolyamines,

présentant une teneur en imidazoline (Y), que l'on ajoute en des proportions de 0,5 à 5% en poids, par rapport à la composition de plastisols, et l'on cuit les plastisols ainsi préparés à des températures partant de 90 °C sur le matériau, et, quand l'une des valeurs X et Y est inférieure à la limite de 40%, la valeur de l'autre composant doit être d'au moins

40+Z (où (Z) est la différence entre la plus petite valeur et 40), mais de préférence cette autre valeur est de 40+2Z.

3. Procédé de préparation de revêtements et de joints collés selon les revendications 1 et 2, caractérisé en ce qu'on utilise l'acide carboxylique selon (B) en des quantités de 3 à 20% en poids, par rapport au mélange d'acides gras.

4. Procédé de préparation de revêtements et de joints collés selon les revendications 1 à 3, caractérisé en ce qu'on utilise comme acides carboxyliques selon (B) des acides carboxyliques aromatiques.

5. Modification du procédé de préparation de revêtements et de joints collés selon les revendications 1 à 4, caractérisée en ce qu'on utilise comme agents d'amélioration de l'adhérence des produits de réaction de produits de condensation, préparés à partir de (A) et de (B), avec des cétones ou des aldéhydes.

6. Modification du procédé de préparation de revêtements et de joints collés selon les revendications 1 à 4, caractérisée en ce qu'on utilise comme agents d'amélioration de l'adhérence des produits d'addition des produits de condensation, préparés à partir de (A) et de (B), avec des composés contenant des groupes époxydes.

7. Plastisols pour la préparation de revêtements sur des matériaux, contenant du poly(chlorure de vinyle) ou des copolymères du chlorure de vinyle en fines particules, des plastifiants usuels, des charges, des additifs, plastisols caractérisés en ce qu'on utilise comme agents d'amélioration de l'adhérence les produits de condensation caractérisés selon une ou plusieurs des revendications 1 à 6.